Europäisches Patentamt

European Patent Office

Office européen des brevets

(11) Veröffentlichungsnummer: **0 243 536 B1**

(12) **EUROPÄISCHE PATENTSCHRIFT**

(45) Veröffentlichungstag der Patentschrift: 06.03.91

(51) Int. Cl.⁵: **B01D 53/26**, B01D 46/26, F24F 3/16, F24F 6/16

(21) Anmeldenummer: 86113743.8

(22) Anmeldetag: 03.10.86

(54) **Vorrichtung zur Reinigung und/oder Be- und Entfeuchtung von Gasen, insbesondere Luft.**

(30) Priorität: 21.01.86 DE 3601628
03.09.86 DE 3629916

(43) Veröffentlichungstag der Anmeldung:
04.11.87 Patentblatt 87/45

(45) Bekanntmachung des Hinweises auf die
Patenterteilung:
06.03.91 Patentblatt 91/10

(84) Benannte Vertragsstaaten:
AT BE CH DE FR GB IT LI NL SE

(56) Entgegenhaltungen:
DE-A- 1 778 268
DE-A- 2 005 852
FR-A- 2 304 385
FR-A- 2 421 345

(73) Patentinhaber: **Venta Industrieanlagen GmbH
Heinrich-Hertz-Strasse 3
W-7987 Weingarten(DE)**

(72) Erfinder: **Hitzler, Alfred
Uhlandstrasse 2
W-7984 Mochenwangen(DE)**

(74) Vertreter: **Patentanwälte Dipl.-Ing. E. Eisele
Dr.-Ing. H. Otten
Seestrasse 42
W-7980 Ravensburg(DE)**

## Beschreibung

Die Erfindung betrifft eine Vorrichtung sowie ein Verfahren zum Reinigen, Be- oder Entfeuchten und Abkühlen von Gasen, insbesondere von Raumluft nach dem Oberbegriff des Anspruchs 1 bzw. des Anspruchs 10.

Vorrichtungen zur Reinigung und/oder Befeuchtung von Gasen, insbesondere von Raumluft sind beispielsweise aus dem deutschen GebrauchsmusterDE-U-81 34 160.1 oder dem deutschen Patent DE-C- 33 08 871 der Anmelderin bekannt. Auf den Aufbau und die Wirkungsweise dieser Vorrichtungen wird hiermit ausdrücklich Bezug genommen. Insbesondere wird auf die Möglichkeit der Luftreinigung und Befeuchtung mittels eines in einer Flüssigkeit rotierenden Plattenstapels hingewiesen. Die langsam rotierenden Scheiben des Plattenstapels werden ständig benetzt, so daß sowohl eine Luftreinigung durch Absorbtion als auch eine Luftbefeuchtung stattfinden kann.

Von der Firma Defensor AG, Zürich ist unter der Bezeichnung Luftbefeuchter 5000-V ein Luftbefeuchter für horizontale Kanäle bekannt geworden, der in Verbindung mit Luftheizapparaten, warmluftheizungen, Klimaanlagen usw. betrieben werden kann. Hierfür wird das nach dem Verdunsterprinzip arbeitende Gerät an einen Kanal angeflanscht, so daß die rotierenden, Feuchtigkeit abgebenden Platten in den Kanal hineinragen. Hierdurch kann die durch den Kanal geleitete Luft eines Luftheizapparates, einer Warmluftheizung oder einer Klimaanlage befeuchtet werden. In den Montagehinweisen dieses bekannten Luftbefeuchters ist vorgesehen, daß dieser möglichst nach einem Lufterhitzer angebracht werden soll, wobei zur Konstanthaltung der relativen Luftfeuchtigkeit eine hygrostatische Steuerung vorgesehen und wobei die Luftfeuchtigkeit am Eintritt des Gerätes gemessen und je nach Meßwert die Luftbefeuchtung mittels dem rotierenden Plattenstapel vorgenommen wird oder nicht.

Das bekannte Gerät hat den Nachteil, daß es nur im Zusammenhang mit vorhandenen Luftheizapparaten, Warmluftheizungen bzw. Klimaanlagen betrieben wird, wobei die Luftfeuchtigkeit und die Lufttemperatur mittels dem vorgeschalteten Lufterhitzer und dem zusätzlichen Luftbefeuchter nur unzureichend reguliert, bzw. beeinflußt werden kann.

Aus der FR-A-2 421 345 ist zwar ein übliches Klimagerät mit einem Verdampfer zur Abkühlung der in das Gerät eintretenden Luft bekannt geworden, wobei die Luftfeuchtigkeit herabgesetzt wird. Die so entfeuchtete Luft kann über den Austrittskondensator wieder erwärmt werden. Ein solches herkömmliches Klimagerät ist jedoch nicht geeignet, eine Reinigung von Gasen gemäß der zuvor beschriebenen Geräte durchzuführen.

Weiterhin ist aus der FR-A-2 304 385 eine Vorrichtung bekannt geworden, bei welcher die angesaugte Luft über ein, in einer Flüssigkeit rotierendes Laufwerk gepreßt wird, um die Luft am benetzten Laufwerk zu reinigen. Hierbei kann die Temperatur der Flüssigkeit variiert werden, was sich auf die Feuchtigkeit der die Vorrichtung durchströmenden Luft auswirkt.

Diese Vorrichtung enthält zwar eine gewisse Beeinflussung der Lufttemperatur. Eine genaue Regelung dieser Parameter durch gezielte Anordnung von Aggregaten zur Beeinflussung der eintretenden und austretenden Luft ist jedoch nicht vorgesehen.

Der Erfindung liegt die Aufgabe zugrunde, die oben genannten Nachteile zu beseitigen und ein kompaktes Gerät sowohl zur Reinigung als auch zur Beeinflussung der Luftfeuchte sowie der Lufttemperatur zu schaffen. Die erfindungsgemäße Vorrichtung soll dabei eine in sich geschlossene Einheit bilden, die nicht zwingend in Zusammenwirkung mit anderen Luftheizapparaten, Warnluftheizungen oder Klimaanlagen steht. Dabei soll neben der Möglichkeit der Reinigung entsprechend den eingangs erwähnten bekannten Geräten zusätzlich die Möglichkeit der gezielten Luftbefeuchtung, Luftentfeuchtung und Temperaturbeeinflussung der Luft gegeben sein. Der Erfindung liegt weiterhin die Aufgabe zugrunde, ein entsprechendes Verfahren zur Behandlung von Gasen bzw. Raumluft vorzuschlagen.

Diese Aufgabe wird ausgehend von einer Vorrichtung der einleitend bezeichnenden Art erfindungsgemäß durch die kennzeichnenden Merkmale des Anspruchs I gelöst. Die Lösung der weiteren Aufgabe ist im Verfahrensanspruch wiedergegeben.

Der Erfindung liegt der Kerngedanke zugrunde, daß die Vorrichtung neben dem gewünschten Reinigungseffekt eine gezielte Regelung der Gasfeuchtigkeit vornehmen muß. Läßt man nicht gesättigtes Gas (im weiteren als "Luft" bezeichnet) mit Raumtemperatur an einem mit Flüssigkeit benetzten Plattenstapel vorbeistreichen, so findet grundsätzlich eine Luftbefeuchtung durch Aufnahme von Flüssigkeit nach dem Kaltverdunstungsprinzip statt. Je nach Schadstoffinhalten der Luft kann dabei als Reinigungsflüssigkeit einfaches Wasser oder Wasser mit zusätzlichen bekannten Absorber- oder Reinigungsmittel dienen.

In bestimmten Räumen kann es jedoch erforderlich sein, daß die Reinigung grundsätzlich ohne eine zusätzliche Anhebung der Luftfeuchtigkeit erfolgen muß. In diesem Fall kann das bekannte Gerät nach Defensor mittels dem Hygrostaten ein- oder ausgeschaltet werden.

Gemäß der vorliegenden Erfindung wird degegen die Luft gleichzeitig mit dem Reinigungsvorgang mehr oder weniger stark abgekühlt, so daß die Luft z. B. beim Eintritt in den Reinigungsprozeß mittels des Plattenstapels ggf. 100%ig gesättigt ist und keine zusätzliche Feuchtigkeit aufnehmen kann. Bei einer weiteren Abkühlung unterhalb des Taupunkts gibt die Luft sogar Kondenswasser ab. Nach dem Reinigungsprozeß mittels des Plattenstapels kann die Luft erwärmt und dabei auf die ursprüngliche Lufttemperatur gebracht werden, es sei denn , der kondensator bzw. Verflüssiger im Bereich des luftaustritts der Vorrichtung wird nicht in den kältemittelkreislauf einbezogen sondern statt dessen der kondensator bzw. Verflüssiger in diesem fall wird die austretende luft aus der vorrichtung nicht wieder auf das Ausgangsniveau erwärmt.

Erfindungsgemäß wird dem bekannten Reinigungsprozeß mittels eines Plattenstapels eine Kälteanlage sinnvoll zugeordnet. Dabei kann die Luftfeuchtigkeit, die Lufttemperatur und der Reinigungsgrad durch Variation der einzelnen Bestandteile der erfindungsgemäßen Vorrichtungen wie Verdampfer und Kondensator des Kältemittelkreislaufes sowie Verweilzeit entlang den Reinigungsplatten beeinflußt werden.

Prinzipiell kann die Abkühlung der Luft an verschiedenen Orten der Vorrichtung erfolgen. Dies geschieht entweder unmittelbar im Lufteintrittsbereich mittels eines Verdampfers oder mittelbar über die abgekühlte Reinigungsflüssigkeit direkt am Plattenstapel. Letzteres hat den Vorteil, daß keine Kondensation und damit Schmutzbildung am Verdampfer stattfindet. Der Plattenstapel dient dann gleichzeitig als Reinigungsfläche, Kühl fläche und ggf. als Kondensationsfläche.

Das erfindungsgemäße Verfahren sieht vor, daß die abgekühlte Paumluft gereinigt und anschließend entweder erwärmt oder direkt der Umgebung zugeführt wird. Im letzteren Fall muß der Kältemittelkreislauf einen zusätzlichen Kondensator zur Verflüssigung des Kältemittels aufweisen. Die in diesem zusätzlichen Kondensator abgegebene Wärme kann dann ggf. anderweitig abgeführt werden.

Durch die in den Unteransprüchen aufgeführten Maßnahmen sind vorteilhafte Weiterbildungen und Verbesserungen der im Hauptanspruch angegebenen Vorrichtung möglich.

In den Unteransprüchen 2 und 3 sind insbesondere die Ausgestaltungen der alternativen Anordnung des Verdampfers angegeben.

Gemäß der Weiterbildung der Erfindung in Unteranspruch 4 kann die Abkühlung der der erfindungsgemäßen Vorrichtung zugeführten Luft mittels des Verdampfers sowie die Erwärmung der im Kondensator bzw. Verflüssiger erwärmten Luft gemessen und entsprechend geregelt werden. Hierdurch läßt sich jede gewünschte Luftbefeuchtung oder Entfeuchtung sowie Temperaturregelung der Luft einstellen.

Gemäß der Ausbildung der Erfindung nach Unteranspruch 5 besteht der Kältemittelkreislauf in an sich bekannter Weise aus einem Verdampfer, einem nachgeschalteten Verdichter, einem Kondensator bzw. Verflüssiger sowie einer diesem nachgeschalteten Drossel.

Die Weiterbildung der Erfindung nach Unteranspruch 8 sieht vor, daß die Flüssigkeit im Flüssigkeitsbehälter der erfindungsgemäßen Vorrichtung mittels einer Wasserstandsregulierung konstant gehalten wird. Ein automatischer Wasserzu- und ablauf dient der Wasserstandsregulierung sowie dem Wechsel des Wassers.

Erfindungsgemäß ist weiterhin vorgesehen, daß eine automatische Zugabe- und/oder Dosiereinrichtung für die Absorberflüssigkeit oder sonstigen Reinigungsmitteln vorgesehen ist.

Vorteilhafte und zweckmäßige Ausführungsbeispiele der Erfindung sind in den Zeichnungen dargestellt und in der nachfolgenden Beschreibung näher erläutert. Es zeigen

Fig. 1   einen Längsschnitt durch eine schematisch dargestellte erfindungsgemäße Vorrichtung mit Verdampfer im Lufteintrittsbereich und

Fig. 2   die Vorrichtung mit Verdampfer in der Flüssigkeit.

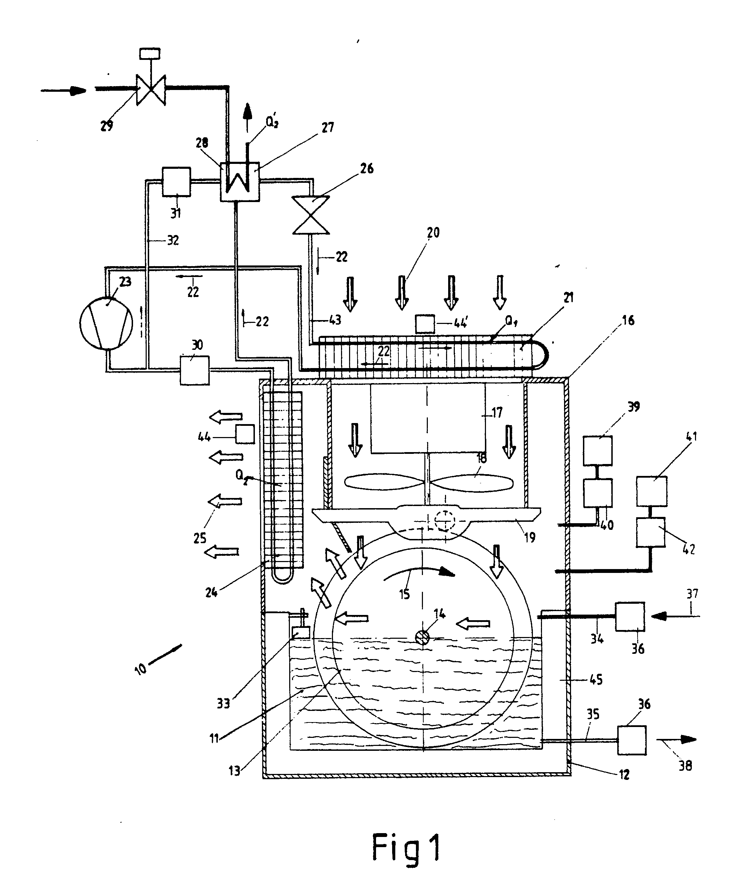

Die Erfindung wird zunächst prinzipiell anhand der Fig. 1 beschrieben: Die erfindungsgemäße Vorrichtung (10) weist ein Flüssigkeit (11) enthaltendes Gehäuseunterteil (12) auf, in dem ein teilweise in der Flüssigkeit eintauchender Plattenstapel (13) mit horizontaler Achse (14) rotiert (Pfeil 15).

Das Gehäuseoberteil (16) enthält einen Antriebsmotor (17) für einen Ventilator (18) und einem Antrieb (19) für die Plattenstapel (13).

Vorstehende Bauart ist aus dem deutschen Gebrauchsmuster DE-U- 81 34 160 bzw. der deutschen Patentschrift DE-C-33 08 871 bekannt. Die Reinigung bzw. Befeuchtung der Zuluft (20) kann mit der erfindungsgemäßen Vorrichtung dementsprechend erfolgen.

Erfindungsgemäß ist der Vorrichtung (10) ein zusätzlicher Kältemittelkreislauf zugeordnet, bestehend aus einem Verdampfer (21), einem im Sinne des Kältemittelumlaufs (22) nachgeschalteten Verdichter (23), einem Kondensator bzw. Verflüssiger (24) im Austrittsbereich der Abluft (25) und einer nachfolgenden Drossel (26) zur Entspannung des Kältemittels. Dabei ist der Verdampfer (21) im Bereich des Lufteintritts, der Verflüssiger (24) im Bereich des Luftaustritts aus der erfindungsgemäßen Vorrichtung (10) angeordnet.

Es ist weiterhin vorgesehen, den Verflüssiger bzw. Kondensator (24) vom Kältemittelkreislauf abzuschalten, so daß ein zusätzlicher Kondensator (27) zur Verflüssigung des Kältemittels vorgesehen ist. Der Wärmeentzug erfolgt dabei über einen Wasserwärmetauscher (28) mit Kühlwasserregelung (29). Das Ventil (30) dient zur Absperrung des Kältemittels zum Kondensator, das Ventil (31) der Absperrung der zusätzlichen Leitung (32).

Ergänzend vorgesehen sind eine Wasserstandsregulierung mit Schwimmerschalter (33) sowie Leitungen (34, 35) mit Absperrventilen (36) für die Wasserzu- (37) und abfuhr (38). Ein Tank mit Absorptionsmittel (39) mit Absperrventil (40) sowie ein Tank mit Reinigungsmittel (41) mit Absperrventil (42) dient der automatischen Zufuhr dieser Mittel.

Die erfindungsgemäße Vorrichtung arbeitet wie folgt: Die angesaugte Zuluft (20) weist eine bestimmte Luftfeuchtigkeit sowie Lufttemperatur auf. Diese Zuluft wird mittels dem Ventilator (18) durch den Verdampfer (21) gesaugt, wobei sich die Zuluft abkühlt und die Wärme $Q_1$ an das Kältemittel in der Leitung (43) des Kältemittelkreislaufes abgibt. Der Kältemittelkreislauf beruht auf dem bekannten Prinzip der Kälteerzeugung, wie beispielsweise beim Kühlschrank.

Die so im Verdampfer (21) abgekühlte Luft innerhalb der Vorrichtung (10) kann infolge der niedrigeren Temperatur weniger oder gar keine Feuchtigkeit mehr aufnehmen oder Feuchtigkeit ab,da die Feuchtigkeitsaufnahme fähigkeit gibt sogar der Luft mit sinkender Temperatur ebenfalls abnimmt. Je nach Abkühlungsgrad der Zuluft im Verdampfer (21) kann deshalb die Luft mehr oder weniger Feuchtigkeit innerhalb der Vorrichtung (10) durch Benetzung des Plattenstapels aufnehmen oder gibt sogar Feuchtigkeit .

Die in der Vorrichtung (10) mittels des rotierenden Plattenstapels (13) gereinigte Luft wird dann beim Ausgang aus dem Gehäuse über einen Kondensator oder Verflüssiger (24) geführt, in dem das im Verdichter (23) verdichtete Kältemittel wieder verflüssigt wird und dabei Wärme an die Abluft (25) abgibt, wodurch sich diese wiederum erwärmt. Die abgegebene Wärme $Q_2$ entsprecht dabei in etwa der im Verdampfer (21) aufgenommenen Wärme $Q_1$ , so daß die Zuluft und etwa die Abluft die gleiche Temperatur und, wenn nicht unter den Taupunlet obgekühlt weurde, die gleiche Feuchtigkeit aufweisen. In diesem Fall kann eine Reinigung der Zuluft erfolgen, ohne daß eine Befeuchtung der Luft stattfindet.

Das im Kondensator (24) verflüssigte Kältemittel wird dann über die Drossel (26) geführt, bevor es wieder dem Verdampfer (21) zugeführt wird. Der Kreislauf des Kältemittels ist mit den Pfeilen 22 wiedergegeben. Sofern der Kondensator (24) wirksam ist, ist das Ventil (30) geöffnet, und der zusätzliche Kondensator (27) außer Betrieb(ventil 31 geschlessen).

In alternativer Betriebsweise kann der Kondensator (24) vom Kältemittelkreislauf ganz oder teilweise ausgeschlossen sein, so daß das Kältemittel über die Leitung (32) und des geöffnete Ventil (31) zu dem zusätzlichen Kondensator (27) gelangt, in welchem die Wärme $Q_2$, an einen Wasserwärmetauscher (28) mit Kühlwasserregelung (29) abgegeben wird. In diesem Fall wird die im Verdampfer (21) abgekühlte Zuluft (20) im Inneren des Gehäuses (10) gereinigt und ohne Wiedererwärmung an die Umgebung in Form der Abluft (25) abgegeben. Die Vorrichtung wirkt dann als Reinigungs- und Kühlgerät, wobei die Luftfeuchtigkeit beibehalten oder abgesenkt werden kann.

Mit einem geeigneten Hygrostatfühler (44, 44') am Ausgang bzw. Eingang der Vorrichtung (10) kann durch eine entsprechende Regelung des Verdampfers (21) bzw. des Kondensators (24) die gewünschte Luftfeuchtigkeit der Abluft (25) geregelt werden. Je nach Stellung der Ventile (30,31) können auch der Kondensator (24) und der zusätzliche Kondensator (27) gleichzeitig in Betrieb sein, um die Wärmezufuhr der Abluft mehr oder weniger stark durch den Kondensator (24) zu beeinflussen. Bei völlig abgeschaltetem Kondensator (24) erfolgt die Wärmeabfuhr ausschließlich an das Kühlwasser mittels Kühlwasserregelung (29).

Die Wasserstandsregulierung im Gehäuseunterteil (12) erfolgt mittels des Schwimmerschalters (33). Die Wasserzu-bzw. Abfuhr erfolgt über die Leitungen (34, 35). Das Gehäuseunterteil weist eine Wärmedämmung (45) auf.

Je nach Art der zu reinigenden Zuluft kann das Absorbermittel (39) durch ein Ventil oder eine Dosiervorrichtung (40)zu dosiert werden. Das gleiche gilt für weitere Reinigungsmittel (41) mittels Ventilen bzw. Dosiervorrichtungen (42).

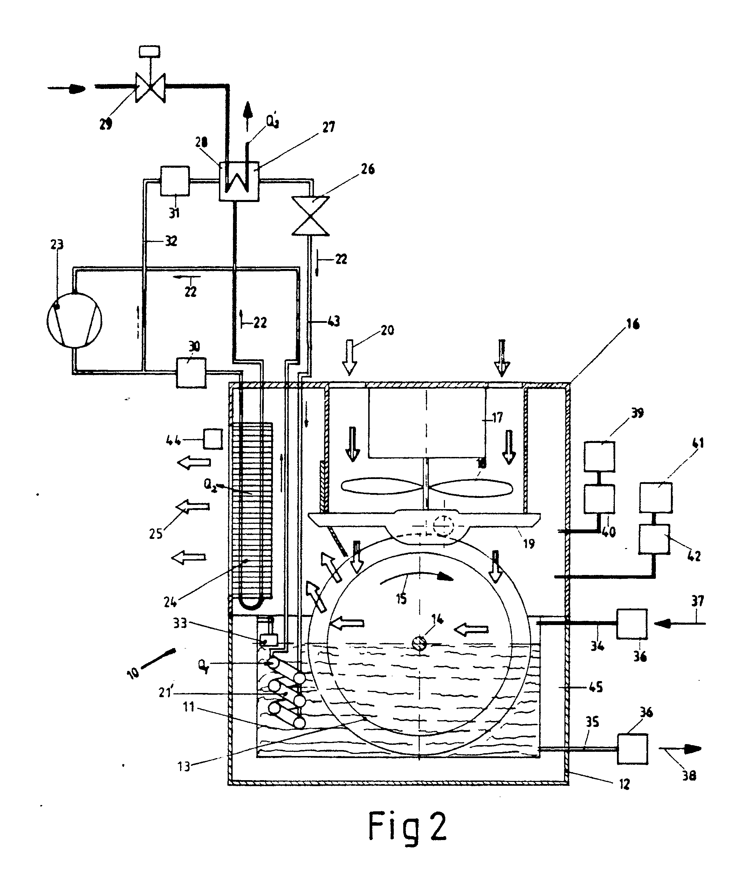

Die in der Fig. 2 dargestellte alternative Ausführungsform der Erfindung zeigt den Verdampfer (21') in der Reinigungsflüssigkeit angeordnet. Hierdurch wird die Flüssigkeit (11) mittels des Kältekreislaufes abgekühlt, so daß die Zuluft (20) im oberen Bereich des Plattenstapels (13) nicht nur gereinigt, sondern gleichzeitig auch abgekühlt wird. Durch diese Abkühlung wird die Feuchtigkeitsaufnahme der zu reinigenden Luft beeinflußt. Erfolgt die Abkühlung unterhalb des Taupunkts kann auch eine Kondensation, d. h. eine Wasserabgabe am Plattenstapel erfolgen. Hierdurch wird die Luftfeuchtigkeit weiter verringert.

Die Anordung nach Fig. 2 hat den Vorteil, daß der Plattenstapel gleichzeitig als Kühlungs-, Reinigungs- und Kondensationsfläche dient. Ausfallender Schmutz kann sich deshalb nicht an einem externen Verdampfer niederschlagen.

Die Vorrichtung nach Fig. 2 hat darüber hinaus den Vorteil, daß der Verdampfer (21') sehr klein ausgeführt werden kann, da ein Wärmeübergang bzw. Kälteübergang in Flüssigkeit wesentlich geringerer Fläche bedarf, als bei einem Wärmeübergang/Kälteübergang zwischen einem Gas- und einem Wärmetauscher.

## Ansprüche

1. Vorrichtung zum Reinigen, Be- oder Entfeuchten und Abkühlen von Gasen, insbesondere von Raumluft, mit wenigstens einem, in einem Gehäuse (12, 16) angeordneten, zum Teil in einer Flüssigkeit (11) eintauchenden, um eine horizontale Achse (14)Đ rotierenden Plattenstapel (13), der von Flüssigkeit (11) benetzbar ist, dadurch gekennzeichnet, daß in die Vorrichtung (10) ein Kältemittelkreislauf (21, 23, 24, 26) integriert ist, mit einem Verdampfer (21, 21') zur Abkühlung des von der Vorrichtung (10) angesaugten Gases, wobei die Abkühlung des Gases unmittelbar am Verdampfer selbst oder mittelbar über die abgekühlte Flüssigkeit (11) am Plattenstapel (13) erfolgt, mit einem im Gasaustrittsbereich (25) der Vorrichtung (10) angeordneten ersten Kondensator (24) zur eventuellen Gaserwärmung, wobei die relative Feuchtigkeit und/oder die Temperatur des aus der Vorrichtung (10) austretenden Gases (25) in Abhängigkeit der Abkühlung des Gases (20) im Verdampfer (21) bzw. am Plattenstapel (13) und/oder Erwärmung des Gases im Kondensator (24) regelbar ist und mit einem dem ersten Kondensator (24) parallelgeschalteten zusätzlichen Kondensator (27) zur eventuellen Abführung von Überschußwärme.

2. Vorrichtung nach Anspruch 1, dadurch gekennzeichnet, daß der verdampfer (21) des Kältemittelkreislaufes (21, 23, 24,26) zur Gasabkühlung im Gaseintrittsbereich (20) vorgesehen ist.

3. Vorrichtung nach Anspruch 1, dadurch gekennzeichnet, daß der Verdampfer (21') zur mittelbaren Abkühlung der Zuluft (20) über den Plattenstapel (13) in der Flüssigkeit (11) zur Abkühlung der Flüssigkeit (11) angeordnet ist.

4. Vorrichtung nach Anspruch 1, 2 oder 3, dadurch gekennzeichnet, daß die Abkühlung der Zuluft (20) mittels des Verdampfers (21) und/oder die Erwärmung der Abluft (25) mittels des Kondensators (24) regelbar ist.

5. Vorrichtung nach Anspruch 1, 2 oder 3, dadurch gekennzeichnet, daß ein Kältemittelkreislauf (21, 23, 24, 26) vorgesehen ist, bestehend aus einem Verdampfer (21) zur Beeinflussung des in die Vorrichtung (10) eintretenden Gases, aus einem im Sinne der Kältemittelströmung (22) nachgeschalteten Verdichter (23), aus einem im Gasaustrittsbereich (25) angeordneten Kondensator (24), sowie aus einer diesem nachgeschalteten Drossel (26).

6. Vorrichtung nach Anspruch 5, dadurch gekennzeichnet, daß dem zusätzlichen Kondensator (27) ein Wärmetauscher (28) und eine Kühlwasserregelung (29) für das Kältemittel zugeordnet sind.

7. Vorrichtung nach Anspruch 6, dadurch gekennzeichnet, daß der Kondensator (24) im Gasaustrittsbereich (25) der Vorrichtung (10) vom Kältemittelkreislauf mittels Absperrventil (30) abtrennbar ist, wobei der Verdichter (23) über eine Verbindungsleitung (32) mit dem zusätzlichen Kondensator (27) verbunden ist.

8. Vorrichtung nach einem oder mehreren der vorhergehenden Ansprüche 1 bis 7, dadurch gekennzeichnet, daß der Flüssigkeitsbehälter (12) der Vorrichtung (10) eine Wasserstandsregulierung mit Schwimmer-Schalter (33) und automatischer Wasserzu- (34) und Abfuhr (35) aufweist.

9. Vorrichtung nach einem oder mehreren der vorhergehenden Ansprüche 1 bis 8, dadurch gekennzeichnet, daß die Vorrichtung eine automatische Zugabe- und/oder Dosiereinrichtung (40, 42) für Absorberflüssigkeit (39) und/oder Reinigungsflüssigkeit bzw. Reiniger (41) aufweist.

10. Verfahren zur Reinigung, Be- und/oder Entfeuchtung und Abkühlung von Gasen, insbesondere von Raumluft,mittels wenigstens eines, in einem Gehäuse (12, 16) angeordneten, zum Teil in einer Flüssigkeit (11) eintauchenden, um eine horizontale Achse (14) rotierenden Plattenstapel (13), der von Flüssigkeit (11) benetzt wird, dadurch gekennzeichnet, daß die Zuluft (20) mittels eines Verdampfers (21) eines Kältemittelkreislaufes (21, 23, 24, 26) direkt oder indirekt abgekühlt (Wärme $Q_1$) daß die gereinigte und entfeuchtete Luft mittels eines Kondensators (24) des Kältemittelkreislaufes ggf.wieder erwärmbar (Wärme $Q_2$) und die Austrittstemperatur der Abluft (25) und damit die Ausgangsfeuchtigkeit regelbar ist, wobei ein zusätzlicher Kondensator (27) für den Kältemittelkreislauf zur eventuellen Abgabe von überschurswarme ($Q_2'$)vorgesehen ist.

## Claims

1. Apparatus for cleaning, humidifying or de-humidifying and cooling gases, in particular ambient air, with at least one stack of plates (13) which is arranged in a housing (12, 16 ), is immersed in part in a liquid (11), rotates round

a horizontal shaft (14) and can be wetted by liquid (11), characterised in that into the apparatus (10) there is integrated a refrigerant circuit (21, ,23, 24, 26) with an evaporator (21, 21') for cooling the gas taken in by the apparatus (10), the gas being cooled directly at the evaporator itself or indirectly via the cooled liquid (11) at the stack of plates (13), with a first condenser (24) arranged in the gas outlet region (25) of the apparatus (10) for possible heating of gas, the relative humidity and/or the temperature of the gas (25) issuing from the apparatus (10) being adjustable as a function of the cooling of the gas (20) in the evaporator (21) or at the stack of plates (13) and/or heating of the gas in the condenser (24) and with an additional condenser (27) connected in parallel with the first condenser (24) for possihle discharge of excess heat.

2. Apparatus according to claim 1, characterised in that the evaporator (21) of the refrigerant circuit (21, 23, 24, 26) for gas cooling is provided in the gas inlet region (20).

3. Apparatus according to claim 1, characterised in that the evaporator (21') for indirect cooling of the incoming air (20) via the stack of plates (13) is arranged in the liquid (11 ) for cooling the liquid (11).

4. Apparatus according to claim 1, 2 or 3, characterised in that the cooling of the incoming air (20) can be adjusted by means of the evaporator (21) and/or the heating of the outgoing air (25) can be adjusted by means of the condenser (24).

5. Apparatus according to claim 1, 2 or 3, characterized in that there is provided a refrigerant circuit (21, 23, 24, 26) consisting of an evaporator (21) for influencing the gas entering the apparatus (10), a compressor (23) connected downstream in the direction of the refrigerant stream (22), a condenser (24) arranged in the gas outlet region (25) and a throttle (26) connected downstream thereof.

6. Apparatus according to claim 5, characterized in that the additional condenser (27) is allocated a heat exchanger (28) and a cooling water controller (29) for the refrigerant.

7. Apparatus according to claim 6, characterized in that the condenser (24) in the gas outlet region (25) of the apparatus (10) can he separated from the refrigerant circuit by means of a check valve (30), the compressor (23) being connected via a connecting line (32) to the additional condenser (27).

8. Apparatus according to one or more of the preceding claims 1 to 7, oharacterized in that the liquid container (12) of the apparatus (10) has a water level regulator with a float switch (33) and automatic water supply (34) and discharge (35).

9. Apparatus according to one or more of the preceding claims 1 to 8, characterized in that the apparatus has an automatic feeder and/or metering device (40,42) for absorber liquid (39) and/or cleaning liquid or cleaner (41).

10. Method of cleaning, humidifying and/or dehumidifying and cooling gases, in particular ambient air, by means of at least one stack of plates (13) which is arranged in a housing (12, 16), is immersed in part in a liquid (11 ), rotates round a horizontal shaft (14) and is wetted by liquid (11), characterised in that the incoming air (20) is cooled (heat $Q_1$) directly or indirectly by means of an evaporator (21) of a refrigerant circuit (21, 23, 24, 26), in that the cleaned and dehumidified air can be reheated ($Q_2$) by means of a condenser (24) of the refrigerant circuit and the outlet temperature of the outgoing air (25) and therefore the output humidity is adjustable, an additional condenser (27) for the refrigerant circuit being provided for the possible discharge of excess heat ($Q_2$').

## Revendications

1. Dispositif pour purifier, humidifier ou déshumidifier et refroidir des gaz, en particulier de l'air ambiant, comportant au moins une pile de plateaux (13) tournant autour d'un axe horizontal (14), plongeant partiellement dans un liquide (11), agencée dans un carter (12,16), et qui peut être mouillée par le liquide (11), caractérisé en ce que, dans le dispositif (10), est intégré un circuit de fluide frigorigène (21,23,24,26), avec un évaporateur (21,21') pour refroidir le gaz aspiré par le dispositif (10), le refroidissement du gaz ayant lieu directement sur l' évaporateur lui-même ou indirectement par l'intermédiaire du liquide refroidi (11) sur la pile de plateaux (13), avec un premier condenseur (24), agencé dans la zone de sortie du gaz (25) du dispositif (10), pour le réchauffement éventuel du gaz, l'humidité relative et/ou la température du gaz (25) sortant du dispositif (10) pouvant être réglées en fonction du refroidissement du gaz (20) dans l'évapora-

teur (21) ou sur la pile de plateaux (13) et/ou du réchauffement du gaz dans le condenseur (24), et avec un condenseur supplémentaire (27), monté en parallèle avec le premier condenseur (24), pour la dissipation éventuelle de la chaleur en excès.

2. Dispositif selon la revendication 1, caractérisé en ce que l'évaporateur (21) du circuit frigorigène (21,23,24,26) pour le refroidissement du gaz est prévu dans la zone d'entrée du gaz (20).

3. Dispositif selon la revendication 1, caractérisé en ce que l'évaporateur (21') pour le refroidissement indirect de l'air amené (20) par l'intermédiaire de la pile de plateaux (13) est agencé dans le liquide (11) pour refroidir le liquide (11).

4. Dispositif selon la revendication 1,2 ou 3, caractérisé en ce que le refroidissement de l'air amené (20) au moyen de l'évaporateur (21) et/ou le réchauffement de l'air sortant (25) au moyen du condenseur (24) sont réglables.

5. Dispositif selon la revendication 1,2 ou 3, caractérisé en ce qu' un circuit de fluide frigorigène (21,23,24,26) est prévu, constitué d'un évaporateur (21) pour influencer le gaz entrant dans le dispositif (10), d'un compresseur (23) disposé en aval dans le sens de l'écoulement du fluide frigorigène (22), d'un condenseur (24) agencé dans la zone de sortie du gaz (25), ainsi que d'une vanne papillon (26) disposée en aval de celui-ci.

6. Dispositif selon la revendication 5, caractérisé en ce qu' un échangeur de chaleur (28) et une régulation d'eau froide (29) pour le fluide frigorigène sont associés au condenseur supplémentaire (27).

7. Dispositif selon la revendication 6, caractérisé en ce que le condenseur (24), dans la zone de sortie du gaz (25) du dispositif (10), peut être isolé du circuit de fluide frigorigène au moyen d'une soupape d'arrêt (30), le compresseur (23) étant relié au condenseur supplémentaire (27) par l'intermédiaire d'une conduite de liaison (32).

8. Dispositif selon une ou plusieurs des revendications précédentes 1 à 7, caractérisé en ce que le récipient de liquide (12) du dispositif (10) présente une régulation du niveau de l'eau ayant un interrupteur à flotteur (33) et une amenée (34) et une sortie (35) d'eau automatiques.

9. Dispositif selon une ou plusieurs des revendications précédentes 1 à 8, caractérisé en ce que le dispositif présente un dispositif de dosage et/ou d'ajout automatique (40,42) pour du liquide absorbeur (39) et/ou du liquide de purification ou purificateur (41).

10. Procédé pour purifier, humidifier et/ou déshumidifier et refroidir des gaz, en particulier de l'air ambiant, au moyen d'au moins une pile de plateaux (13) tournant autour d'un axe horizontal (14), plongeant partiellement dans un liquide (11), agencée dans un carter (12,16), et qui est mouillée par le liquide (11), caractérisé en ce que l'air amené (20) est refroidi directement ou indirectement au moyen d'un évaporateur (21) d'un circuit de fluide frigorigène (21,23,24,26) (chaleur $Q_1$), en ce que l'air purifié et déshumidifié peut être à nouveau réchauffé, le cas échéant, au moyen d'un condenseur (24) du circuit de fluide frigorigène (chaleur $Q_2$), et la température de sortie de l'air sortant (25) et, ainsi, l'humidité de sortie sont réglables, un condenseur supplémentaire (27) pour le circuit de fluide frigorigène étant prévu pour la dissipation éventuelle de la chaleur en excès ($Q_2'$).

Fig 1

Fig 2